# EUROPEAN PATENT APPLICATION

(11) **EP 4 717 972 A2**
(43) Date of publication of application: **01.04.2026**
(21) Application number: 26157716.7
(22) Date of filing: 25.04.2023
(51) Int. Cl.: F21Y 115/30

(54) **LIGHT DIFFUSION SHEET, BACKLIGHT UNIT, LIQUID CRYSTAL DISPLAY DEVICE, AND INFORMATION EQUIPMENT**

(30) Priority: 28.04.2022 JP 2022074562; 24.04.2023 JP 2023070563
(62) Divisional of application: 23796354.1
(71) Applicant: KEIWA Incorporated, Tokyo 103-0025 (JP)
(72) Inventor: SHIBA, Satoshi, Tokyo 103-0025 (JP); KARIYA, Yu, Tokyo 103-0025 (JP); FUKUDA, Tadayoshi, Tokyo 103-0025 (JP); HARADA, Kenichi, Tokyo 103-0025 (JP); OGIDA, Onta, Tokyo 103-0025 (JP)
(74) Representative: Lorenz Seidler Gossel Part. mbB

(57) **Abstract**

A light diffusion sheet 43 has a first surface 102a serving as a light emitting surface or a light incident surface and having an uneven shape configured to diffuse light. In the light diffusion sheet 43, a luminance uniformity layer 103 having a plurality of particles 107 provided on a second surface 101a opposite to the first surface 102a.

## Description

### TECHNICAL FIELD

The present disclosure relates to a light diffusion sheet, a backlight unit, a liquid crystal display device, and an information equipment.

### BACKGROUND ART

Liquid crystal display devices (hereinafter referred to as liquid crystal displays in some cases) have been widely used as display devices for various information equipment such as smartphones and tablet terminals. A major type of a backlight of a liquid crystal display is a direct type in which light sources are arranged on the back surface of the liquid crystal panel.

A direct-type backlight uses a light diffusion sheet to diffuse light emitted from a light source such as a light emitting diode (LED) to improve the uniformity of luminance and the same of chromaticity over the entire screen. Further, in order to improve the uniformity of luminance in a screen (the in-plane luminance uniformity), a direct-type backlight may use a plurality of layered light diffusion sheets. Patent document 1 discloses a light diffusion sheet using light diffusion produced by recesses having an inverted pyramid shape.

### CITATION LIST

### PATENT DOCUMENT

Patent Document 1: U.S. Patent Application Publication No. 2021/0072598A1.

### SUMMARY OF THE INVENTION

### TECHNICAL PROBLEM

Regarding a backlight of a liquid crystal display, as a display is required to be thinner, the thickness of the light diffusion sheet and the number of layers of the light diffusion sheets are also required to be reduced. Further, a direct-type backlight has light sources arranged below the display screen, and thus reduction in the distance between the light sources and the light diffusion sheet is also required. Therefore, it is necessary to improve a luminance uniformity capability of the light diffusion sheet in order to maintain the in-plane luminance uniformity even when the thickness of the display is reduced.

It is an object of the present disclosure to provide a light diffusion sheet having a high luminance uniformity capability.

### SOLUTION TO THE PROBLEM

To achieve the above object, the light diffusion sheet of the present disclosure is a light diffusion sheet including a first surface serving as a light emitting surface or a light incident surface and having an uneven shape configured to diffuse light, wherein a luminance uniformity layer having a plurality of particles or a dot pattern is provided on a second surface opposite to the first surface.

The light diffusion sheet of the present disclosure includes the first surface having an uneven shape configured to diffuse light, and includes the second surface on which the luminance uniformity layer in which the plurality of particles are dispersed or the luminance uniformity layer which constitutes a dot pattern is provided. Accordingly, the light is further diffused by the plurality of particles or the dot pattern of the luminance uniformity layer. Thus, the luminance uniformity capability of the light diffusion sheet can be improved, and it is possible to cope with reduction in the thickness of the light diffusion sheet or the number of layers of the light diffusion sheets accompanied by further reduction in the thickness of the display.

In the present disclosure, the "light diffusion sheet" encompasses a plate-like "light diffusion plate" and a film-like "light diffusion film."

In the light diffusion sheet of the present disclosure, the luminance uniformity layer may comprise a light transmissive ink or resin, each containing the plurality of particles. Accordingly, the luminance uniformity layer can be easily formed by printing or coating. In this case, if the luminance uniformity layer is uniformly provided on the second surface and the luminance uniformity layer has a thickness of 5 µm or more, light scattering is promoted in the thickness direction of the luminance uniformity layer, and thus the light diffusion function is enhanced and the luminance uniformity is improved. If the luminance uniformity layer is uniformly provided on the second surface and the mass ratio of the plurality of particles to the ink or the resin in the luminance uniformity layer is 40% or more, light scattering by the luminance uniformity layer is promoted, and thus the light diffusion function is enhanced and the luminance uniformity is improved. If the luminance uniformity layer is configured with the ink arranged in a dot shape, each part of the luminance uniformity layer constituting the dot pattern contains the particles, and thus the luminance uniformity capability per one single light diffusion sheet can be further improved by light diffusion by the dot pattern and light diffusion by the particles. In this case, if the ink is arranged so that dots having a plurality of different diameters are provided, the dots having a plurality of different diameters and a plurality of different heights are arranged together, and thus the light scattering effect is increased and the luminance uniformity is improved. If a ratio of an area in the second surface where the ink is arranged is 35% or less, the luminance uniformity is more improved by the light diffusion function of the dot pattern than when the ink is provided on the second surface through solid printing.

In the light diffusion sheet of the present disclosure, the plurality of particles may have a hollow structure. Accordingly, the difference between the refractive index of the hollow portion (e.g., air) of the particle and the refractive index of the binder portion that fixes the particles in the luminance uniformity layer becomes larger. Thus, the light diffusing effect by the particles increases, and the luminance uniformity capability of the light diffusion sheet can be further improved.

In the light diffusion sheet of the present disclosure, the average particle diameter of the plurality of particles may be 0.1 µm or more and 30 µm or less. Accordingly, the light diffusing effect by the particles is ensured, whereas an increase in the thickness of the luminance uniformity layer can be reduced.

In the light diffusion sheet of the present disclosure, the uneven shape may be formed by a plurality of recesses having a substantially inverted quadrangular pyramid shape and arranged in a two dimensional matrix. Accordingly, the light diffusing effect by the uneven shape increases, and the luminance uniformity capability of the light diffusion sheet can be further improved.

In the light diffusion sheet of the present disclosure, the second surface may be a matte surface or a flat surface. Accordingly, the luminance uniformity layer can be easily formed by printing or coating.

A backlight unit of the present disclosure is a backlight unit built in a liquid crystal display device and guiding light emitted from a plurality of light sources toward a display screen. The backlight unit includes the light diffusion sheet of the present disclosure provided between the display screen and the plurality of light sources.

The backlight unit of the present disclosure includes the above light diffusion sheet of the present disclosure, and thus the luminance uniformity capability of the light diffusion sheet can be improved. Thus, the thickness of the backlight unit can be further reduced by, for example, reducing the thickness of the light diffusion sheet or the number of layered light diffusion sheet, whereas the in-plane luminance uniformity can be maintained.

A liquid crystal display device of the present disclosure includes the above backlight unit of the present disclosure and a liquid crystal display panel.

The liquid crystal display device of the present disclosure includes the backlight unit of the present disclosure, and thus the thickness of the liquid crystal display device can be reduced while the in-plane luminance uniformity is maintained.

An information equipment of the present disclosure includes the liquid crystal display device of the present disclosure.

The information equipment of the present disclosure includes the above liquid crystal display device of the present disclosure, and thus the thickness of the information equipment can be reduced while the in-plane luminance uniformity is maintained.

### ADVANTAGES OF THE INVENTION

The present disclosure can provide a light diffusion sheet having a high luminance uniformity capability; and a backlight unit, a liquid crystal display device, and an information equipment, each using the light diffusion sheet.

### BRIEF DESCRIPTION OF THE DRAWINGS

FIG. 1 is a cross-sectional view of a liquid crystal display device of an embodiment.
FIG. 2 is a cross-sectional view of a backlight unit of the embodiment.
FIG. 3 is a cross-sectional view of a basic configuration of a light diffusion sheet used in the backlight unit of the embodiment.
FIG. 4 is a cross-sectional view of an example of a luminance uniformity layer being provided in the light diffusion sheet of the embodiment.
FIG. 5 is a perspective view of the light diffusion sheet of the embodiment being viewed from a surface on which recesses are provided.
FIG. 6 shows a planar configuration and a cross-sectional configuration of the recesses provided on the light diffusion sheet of the embodiment.
FIG. 7 shows a relationship between an arrangement direction of light sources and an arrangement direction of the recesses of the light diffusion sheet in the backlight unit of the embodiment. FIG. 7A shows an arrangement of the light sources, and FIG. 7B shows an arrangement of the recesses.
FIG. 8 is a cross-sectional view of another example of a luminance uniformity layer being provided on the light diffusion sheet of the embodiment.
FIG. 9 is a cross-sectional view of a planar configuration of the luminance uniformity layer shown in FIG. 8.
FIG. 10 is a cross-sectional view of a luminance uniformity layer being provided on a light diffusion sheet of a modification.
FIG. 11 is a cross-sectional view of a backlight unit used to evaluate the light diffusion sheets of Examples 12 to 25.
FIG. 12 shows evaluation results of the luminance and luminance uniformity of the light diffusion sheets of Examples 12 to 15.
FIG. 13 shows evaluation results of the luminance and luminance uniformity of the light diffusion sheets of Examples 16 to 21.
FIG. 14 is plan views of dot patterns of the light diffusion sheets of Examples 22 to 25.
FIG. 15 shows evaluation results of the luminance and luminance uniformity of the light diffusion sheets of Examples 22 to 25.

### DESCRIPTION OF EMBODIMENS

### (Embodiment)

A light diffusion sheet, a backlight unit, a liquid crystal display device, and an information equipment of an embodiment will be described with reference to the drawings. Note that the scope of the present disclosure is not limited to the following embodiments, and may be altered in any way within the scope of the technical concept of the present disclosure.

### <Liquid Crystal Display Device>

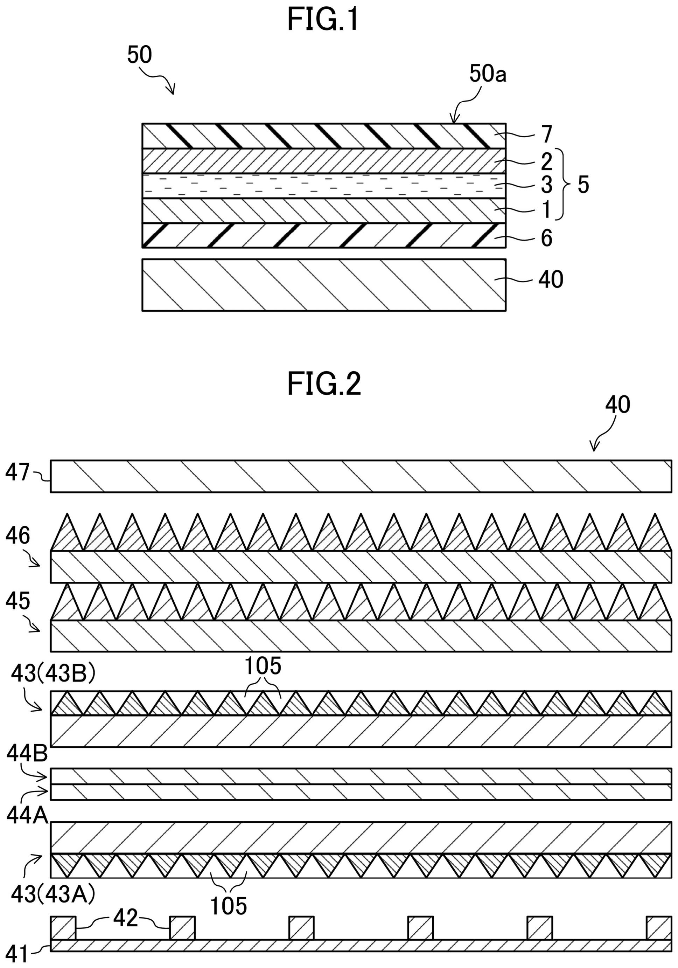

FIG. 1 shows an exemplary cross-sectional configuration of a liquid crystal display device of the present embodiment.

As shown in FIG. 1, a liquid crystal display device 50 includes a liquid crystal display panel 5, a first polarizing plate 6 attached to a lower surface of the liquid crystal display panel 5, a second polarizing plate 7 attached to an upper surface of the liquid crystal display panel 5, and a backlight unit 40 provided on a back surface side of the liquid crystal display panel 5 with the first polarizing plate 6 sandwiched therebetween. The liquid crystal display panel 5 includes a TFT substrate 1 and a CF substrate 2 provided so as to face each other, a liquid crystal layer 3 provided between the TFT substrate 1 and the CF substrate 2, and a sealing (not shown) provided in a frame shape to seal the liquid crystal layer 3 between the TFT substrate 1 and the CF substrate 2.

The shape of a display screen 50a of the liquid crystal display device 50 viewed from the front (the top in FIG. 1) is basically a rectangle or a square. Alternatively, the shape may be any shape such as a rectangle with rounded corners, an oval, a circle, a trapezoid, or the shape of an instrument panel of an automobile.

The liquid crystal display device 50 applies a voltage of a predetermined magnitude to the liquid crystal layer 3 in sub-pixels corresponding to pixel electrodes, thereby changing the alignment state of the liquid crystal layer 3. This adjusts the transmittance of light incident from the backlight unit 40 through the first polarizing plate 6. The light whose transmittance is adjusted is emitted through the second polarizing plate 7 to display an image.

The liquid crystal display device 50 of the present embodiment is used as a display device built in various information equipments (e.g., an in-vehicle device such as a car navigation system, a personal computer, a mobile phone, a portable information terminal, a portable game machine, a copying machine, a ticket vending machine, an automated teller machine, and the like).

The TFT substrate 1 includes, e.g., a plurality of TFTs arranged in a matrix on a glass substrate, an interlayer insulating film arranged in such a manner as to cover the TFTs, a plurality of pixel electrodes arranged in a matrix on the interlayer insulating film and connected to their respective TFTs, and an alignment film arranged in such a manner as to cover the pixel electrodes. The CF substrate 2 includes, e.g., a black matrix arranged in a lattice manner on a glass substrate, a color filter including a red layer, a green layer, and a blue layer arranged between lattices of the black matrix, a common electrode arranged in such a manner as to cover the black matrix and the color filter, and an alignment film arranged in such a manner as to cover the common electrode. The liquid crystal layer 3 is made of, e.g., a nematic liquid crystal material containing liquid crystal molecules having electro-optical characteristics. The first polarizing plate 6 and the second polarizing plate 7 each includes, e.g., a polarizer layer having a polarization axis in one direction, and a pair of protective layers arranged in such a manner as to sandwich the polarizer layer.

### <Backlight Unit>

FIG. 2 shows an exemplary cross-sectional configuration of the backlight unit of the present embodiment.

As shown in FIG. 2, the backlight unit 40 mainly includes a plurality of light sources 42 and a light diffusion sheet 43 provided above the plurality of light sources 42. The plurality of light sources 42 may be arranged two dimensionally on a reflection sheet 41. The plurality of light sources 42 may be, e.g., white light sources or blue light sources. The light diffusion sheet 43 may include a plurality of light diffusion sheets 43. In this example, the light diffusion sheet 43 includes a lower first light diffusion sheet 43A and an upper second light diffusion sheet 43B. The first light diffusion sheet 43A has a light incident surface provided with a plurality of recesses 105 having a substantially inverted quadrangular pyramid shape, and the second light diffusion sheet 43B has a light emitting surface provided with a plurality of recesses 105 having a substantially inverted quadrangular pyramid shape.

A wavelength selection sheet 44A and a color conversion sheet 44B may be arranged between the first light diffusion sheet 43A and the second light diffusion sheet 43B. The wavelength selection sheet 44A is arranged below the color conversion sheet 44B. The wavelength selection sheet 44A selectively transmits light having the emission wavelength of the light sources 42 and reflects light having other wavelengths. The color conversion sheet 44B converts a color of light emitted by the light sources 42.

Above the light diffusion sheet 43 (second light diffusion sheet 43B), a first prism sheet 45 and a second prism sheet 46 may be arranged in sequence to improve the luminance. Above the second prism sheet 46, a luminance enhancing sheet 47 such as a one-way reflective polarizing film may be further arranged to further improve the luminance.

### [Reflection Sheet]

The reflection sheet 41 is formed of, e.g., a white polyethylene terephthalate resin film, a silver-deposited film, or the like.

### [Light Source]

The type of the light sources 42 is not particularly limited. For example, an LED element, a laser element, or the like may be adopted, and an LED element may be used in terms of costs, productivity, and the like. Each of the light sources 42 may have a rectangular shape in a plan view, where each side may be 10 µm or more (preferably 50 µm or more) and 20 mm or less (preferably 10 mm or less, more preferably 5 mm or less). When an LED is used as each of the light sources 42, a plurality of LED chips may be arranged on the reflection sheet 41 at regular intervals. In order to adjust light emission angle characteristics of the LED serving as the light source 42, a lens may be attached to the LED. The number of the light sources 42 is not particularly limited, but preferably, to be distributed, the plurality of light sources 42 may be arranged regularly on the reflection sheet 41. The "arranged regularly" means arrangement with a certain regularity. For example, the light sources 42 may be arranged at equal intervals. When the light sources 42 are arranged at equal intervals, the distance between the centers of adjacent two of the light sources 42 may be 0.5 mm or more (preferably 2 mm or more) and 20 mm or less.

### [Light Diffusion Sheet]

The light diffusion sheets 43 focus light rays incident from the light sources 42 in the normal direction while defusing the light rays (that is, the light diffusion sheets 43 focus and diffuse the light rays). FIG. 2 illustrates that the light diffusion sheet 43 includes two light diffusion sheets 43 in the backlight unit 40. Alternatively, the light diffusion sheet 43 may include one single light diffusion sheet 43, or three or more light diffusion sheets 43. A matrix resin constituting the light diffusion sheets 43 is not particularly limited, as long as it is a material that transmits light. Examples may include polycarbonate, acrylic, polystyrene, methyl methacrylate-styrene copolymer resin (MS resin), polyethylene terephthalate, polyethylene naphthalate, cellulose acetate, and polyimide. The thickness of the light diffusion sheet 43 is not particularly limited, but may be, e.g., 50 µm or more and 3 mm or less. The light diffusion sheet 43 with a thickness larger than 3 mm makes it difficult to achieve a reduction in the thickness of the liquid crystal display, whereas the light diffusion sheet 43 with a thickness less than 50 µm makes it difficult to obtain sufficient light diffusing effect. As shown in FIG. 2, when the light diffusion sheet 43 includes a plurality of light diffusion sheets 43, the total thickness may be about several hundreds µm to several mm. The light diffusion sheet 43 may have a film shape or a plate shape. The detailed configuration and manufacturing method of the light diffusion sheet 43 will be described later.

### [Wavelength Selection Sheet and Color Conversion Sheet]

The wavelength selection sheet 44A selectively transmits light (e.g., blue light) having the emission wavelength of the light sources 42 and reflects light having other wavelengths. The color conversion sheet 44B converts light (e.g., blue light) emitted from the light sources 42 into light having a wavelength of a certain color (e.g., green or red) as a peak wavelength. The color conversion sheet 44B converts, e.g., blue light with a wavelength of 450 nm into green light with a wavelength of 540 nm and red light with a wavelength of 650 nm. In this case, when the light source 42 emitting blue light with a wavelength of 450 nm is used, the color conversion sheet 44B partially converts blue light into green light and red light, and thus the light transmitted through the color conversion sheet 44B becomes white light. The color conversion sheet 44B may be, e.g., a quantum dot (QD) sheet, a fluorescent sheet, or the like. The wavelength selection sheet 44A is arranged below the color conversion sheet 44B, and thus light of which the wavelength has been changed by the color conversion sheet 44B can proceed to only above the color conversion sheet 44B.

The wavelength selection sheet 44A and the color conversion sheet 44B can be provided at any position between the light sources 42 and the first prism sheet 45. When the light sources 42 are white light sources, the wavelength selection sheet 44A and the color conversion sheet 44B may not be provided.

### [Prism Sheet]

The first prism sheet 45 and the second prism sheet 46 refract light rays incident from the light diffusion sheet 43 in the normal direction. On the light emitting surfaces of the prism sheets 45 and 46, for example, a plurality of grooves each having an isosceles triangular transversal cross-section are provided adjacent to one another, and a triangular prism part sandwiched between a pair of grooves adjacent to each other constitute a prism. The apex angle of the prism is, e.g., about 90°. The grooves formed on the first prism sheet 45 and the grooves formed on the second prism sheet 46 may be arranged so that each groove on the first prism sheet 45 and each groove on the second prism sheet 46 are perpendicular to each other. Accordingly, light rays incident from the light diffusion sheet 43 can be refracted in the normal direction by the first prism sheet 45, and light rays emitted from the first prism sheet 45 can be further refracted by the second prism sheet 45 in a direction substantially perpendicular to the light incident surface of the luminance enhancing sheet 47. The prism sheets 45 and 46 may be layered as separate sheets, or may be integrated as a single piece. The total thickness of the prism sheets 45 and 46 may be, e.g., about 100 to 400 µm. The prism sheets 45 and 46 may be made of, e.g., polyethylene terephthalate (PET) film with a prism shape formed by using UV-curable acrylic resin.

### [Luminance Enhancing Sheet]

The luminance enhancing sheet 47 may increase the luminance by using the double reflection and the refractive index of light and concentrating light rays when the light passes through the inside of the sheet. Alternatively, the luminance enhancing sheet 47 may the increase luminance by recycling S waves that do not pass through the first polarizing plate 6 of the liquid crystal display device 50 and converting them into P waves that pass through the first polarizing plate 6. If the prism sheets 45 and 46 provide sufficient luminance enhancement effect, the luminance enhancing sheet 47 may not be provided.

### <Configuration of Light Diffusion Sheet>

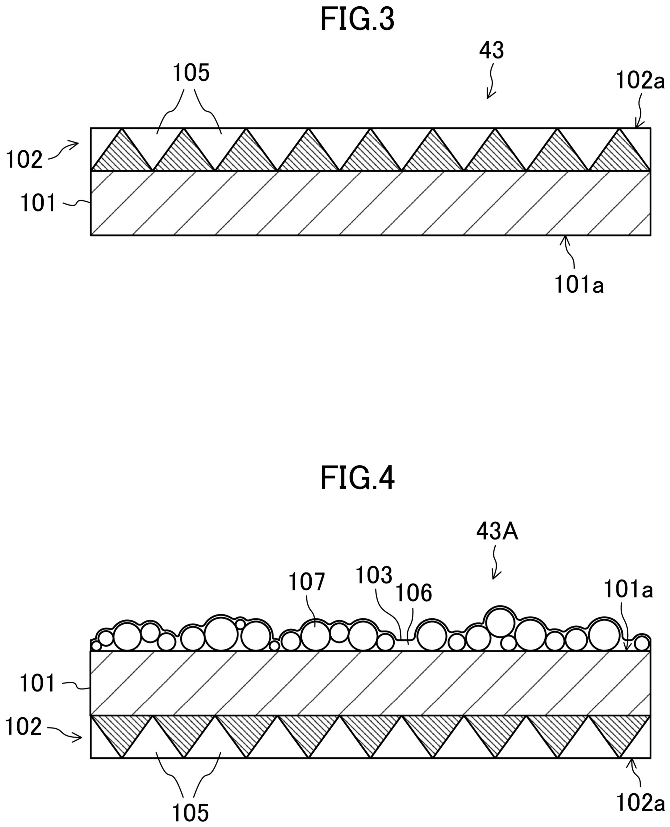

As shown in FIG. 3, the light diffusion sheet 43 mainly includes a base material layer 101 and a light diffusion layer 102 provided on the base material layer 101. The light diffusion sheet 43 has a first surface 102a (a surface of the light diffusion layer 102) serving as one of the light emitting surface or the light incident surface, and a second surface 101a (a surface of the base material layer 101) serving as the other one of the light emitting surface or the light incident surface. The light diffusion layer 102 has a plurality of recesses 105 having an uneven shape that diffuses light, where the uneven shape is, e.g., a substantially inverted polygonal pyramid shape (in this example, a substantially inverted quadrangular pyramid shape (inverted pyramid shape)). The second surface 101a of the light diffusion sheet 43 may be, e.g., a matte surface or a flat surface. In the example shown in FIG. 2, the first light diffusion sheet 43A is arranged so that the first surface 102a faces the light source 42, and the second light diffusion sheet 43B is arranged so that the second surface 101a faces the light source 42.

As shown in FIG. 4, in the present embodiment, a luminance uniformity layer 103 is provided on the second surface 101a of the first light diffusion sheet 43A. The luminance uniformity layer 103 is formed of, e.g., a light transmissive resin 106 with a plurality of particles 107 dispersed therein.

### [Base Material Layer]

Since the light rays need to pass through the base material layer 101, the base material layer 101 is formed mainly of a transparent (e.g., colorless and transparent) synthetic resin. The main component of the base material layer 101 is not particularly limited, and may be, e.g., polycarbonate, polyethylene terephthalate, polyethylene naphthalate, an acrylic resin, polystyrene, polyolefin, cellulose acetate, weather-resistant vinyl chloride, and the like. The term "main component" refers to a component of which the content is the highest in the base material layer 101, e.g., a component of which the content is 50% or more by mass. The base material layer 101 may contain a diffusing agent or other additives, or may be substantially free of additives. The additives that can be contained are not particularly limited, and may be inorganic particles such as silica, titanium oxide, aluminum hydroxide, barium sulfate, and the like, or may be organic particles such as acrylic, acrylonitrile, silicone, polystyrene, polyamide, and the like.

The lower limit of the average thickness of the base material layer 101 is preferably about 10 µm, more preferably about 35 µm, and still more preferably about 50 µm. The upper limit of the average thickness of the base material layer 101 is preferably about 500 µm, more preferably about 250 µm, and still more preferably about 180 µm. If the average thickness of the base material layer 101 is less than the lower limit, curling may occur when the diffusion layers 102 and 103 are formed. On the other hand, if the average thickness of the base material layer 101 is more than the upper limit, the liquid crystal display device 50 may have a lower luminance, and the liquid crystal display device 50 may be unable to have a necessary thinner thickness. The "average thickness" refers to an average value of thicknesses at any 10 points.

### [Light Diffusion Layer]

Since the light rays need to pass through the light diffusion layer 102, the light diffusion layer 102 may be formed mainly of a transparent (e.g., colorless and transparent) synthetic resin. For example, the light diffusion layer 102 may be integrally formed with the base material layer 101 at the time of extrusion molding of the base material resin that becomes the base material layer 101, or may be separately formed by using an ultraviolet curable resin after molding of the base material layer 101.

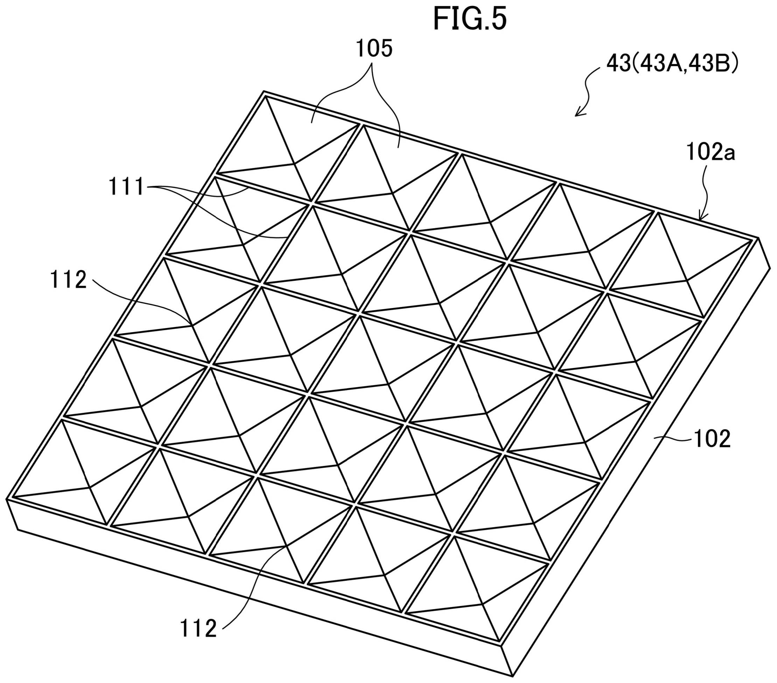

The plurality of recesses 105 having a substantially inverted quadrangular pyramid shape (inverted pyramid shape) and provided in the light diffusion layer 102 (the first surface 102a of the light diffusion sheet 43) may be arranged in a two dimensional matrix as illustrated in FIG. 5, for example. In other words, the plurality of recesses 105 may be arranged along two directions perpendicular to each other. The recesses 105 adjacent to each other are parted by a ridge 111. The ridge 111 extends along the two directions in which the recesses 105 are arranged. The arrangement pitch of the recesses 105 may be, e.g., about 50 µm or more and about 500 µm or less. A center 112 (apex of the inverted pyramid) of the recess 105 is a deepest portion of the recess 105. The center 112 (deepest portion) of the recess 105 may reach the surface (light emitting surface) of the base material layer 101. In other words, the depth of the recess 105 may be equal to the thickness of the light diffusion layer 102. FIG. 5 illustrates that the recesses 105 are arranged in a 5 × 5 matrix for simplicity, but the actual number of the recesses 105 is much larger.

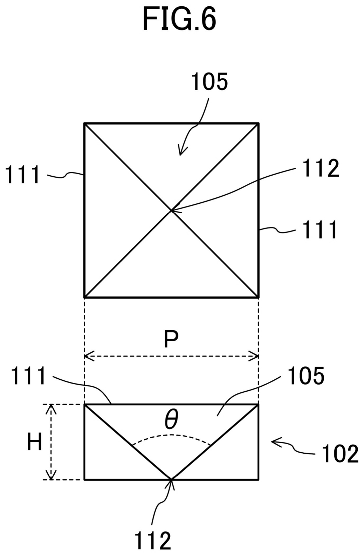

The apex angle θ of the recess 105 is set to, e.g., about 90°. As shown in FIG. 6, the apex angle θ of the recess 105 is an angle formed by inclined surfaces of the recess 105 which sandwich the apex 112 of the inverted pyramid and face each other, where a cross-section (the lower drawing of FIG. 6) appears when the recess 105 is cut by a plane (a longitudinal cross-section) vertical to a plane (a horizontal plane) on which the light diffusion sheet 43 is placed, such that the plane (the longitudinal cross-section) passes through the apex 112 and vertically traverses a pair of ridges 111 which sandwich the apex 112 and face each other. The upper drawing of FIG. 6 shows a planar configuration of the recess 105. Further, in FIG. 6, the reference character "H" represents the depth of the recess 105 (the height of the pyramid shape), and the reference character "P" represents the horizontal width of the recess 105 (that is, the arrangement pitch of the recesses 105). The depth H of the recess 105 is determined by the arrangement pitch P of the recess 105 and the apex angle θ of the recess 105.

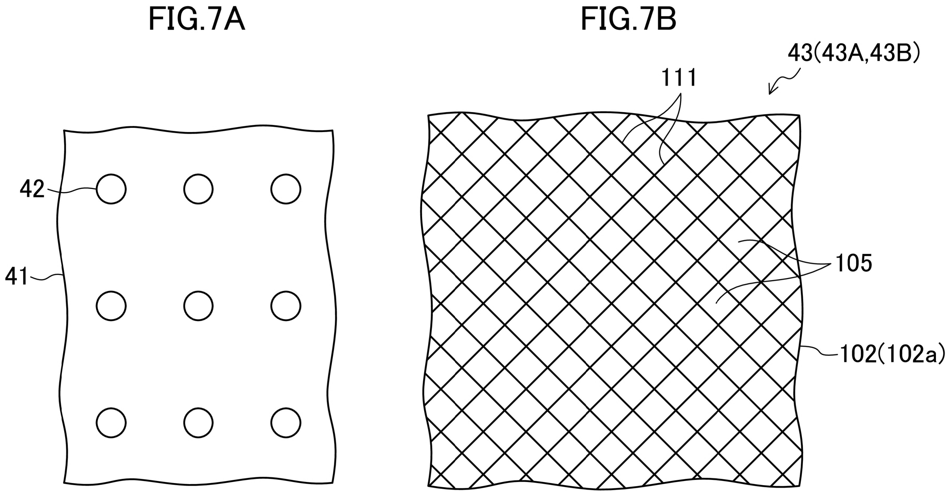

When the plurality of light sources 42 are arranged in square as shown in FIG. 7A, the arrangement direction of the recesses 105 may be tilted by, e.g., about 45° with respect to the arrangement direction of the light sources 42 as shown in FIG. 7B. When the recesses 105 are formed in an inverted pyramid shape, the luminance uniformity can be more improved when the arrangement direction of light sources 42 and the arrangement direction of the recesses 105 intersect with each other than when the arrangement directions thereof align with each other.

In the present embodiment, the recesses 105 having an inverted pyramid shape (substantially inverted quadrangular pyramid shape) are arranged in a two dimensional matrix and provided with an uneven shape. Alternatively, the recesses 105 may be arranged randomly so that the advantages of the present invention are not lost. When the recesses 105 are regularly arranged two dimensionally, a gap may be provided or may not be provided between the recesses 105. The recess 105 may have a substantially inverted polygonal pyramid shape other than the substantially inverted quadrangular pyramid shape. For example, the "inverted polygonal pyramid" shape of the recess 105 may be an inverted triangular pyramid or an inverted hexagonal pyramid which can be two dimensionally arranged without a gap similarly to the inverted quadrangular pyramid. When the shape of the "inverted polygonal pyramid" of the recess 105 is an inverted quadrangular pyramid, it is easy to improve the accuracy of cutting of the surface of dies (metal rolls) used in a manufacturing process such as extrusion molding or injection molding at the time of formation of the recesses 105.

In the present disclosure, the term "substantially inverted polygonal pyramid" is used in consideration of difficulty in formation of a recess having a geometrically exact inverted polygonal pyramid shape by an ordinary shape transfer technique. However, the "substantially inverted polygonal pyramid" encompasses shapes that can be regarded as a true or approximately inverted polygonal pyramid. Here, "substantial(ly)" XX means that shapes can be approximated to the XX. For example, "substantially inverted quadrangular pyramids" mean that shapes can be approximated to the inverted quadrangular pyramids. For example, the "substantially inverted polygonal pyramid" includes an "inverted truncated polygonal pyramid" which has a flat apex and of which the area of the apex is small while the advantages of the present invention are not lost. The "substantially inverted polygonal pyramid" also includes a deformation of "inverted polygonal pyramid" with unavoidable shape variations due to the processing accuracy of industrial production.

### [Luminance Uniformity Layer]

As shown in FIG. 4, in the present embodiment, the luminance uniformity layer 103 is provided on the second surface 101a of the first light diffusion sheet 43A. The luminance uniformity layer 103 is formed of, e.g., a light transmissive resin 106 with a plurality of particles 107 dispersed therein. The surface of the luminance uniformity layer 103 may be uneven or may be flat. The luminance uniformity layer 103 is a layer different from the base material layer 101 of the light diffusion sheet 43, and is provided on the surface (the second surface 101a) of the base material layer 101 by printing or coating, for example.

The material of the resin 106 constituting the luminance uniformity layer 103 is not particularly limited as long as the material can transmit light rays, and the material may be a transparent resin such as acrylic urethane.

The material, shape, and size of the particles 107 dispersed in the luminance uniformity layer 103 are not particularly limited as long as the particles 107 function as diffusing agents or reflecting agents. The material of the particle 107 may be, e.g., acrylic, styrene, titanium, silica, nylon, urethane, or the like. The shape of the particle 107 may be a bead shape like, e.g., an acrylic bead, or may be a fibrous shape like, e.g., a cellulose nanofiber. The size of the particle 107 (the diameter of the particle 107 having a bead shape, or the length of the particle 107 having a fibrous shape) may be about tens of nm to 100 µm, preferably about 0.1 µm to 30 µm. The particle 107 may be monodisperse or may be polydisperse. The particle 107 may have a hollow structure. In this case, the particle 107 may be single-hollow or may be multi-hollow.

The thickness of the luminance uniformity layer 103 is not particularly limited as long as the particles 107 can be fixed by the resin 106. The ratio of the content of the particles 107 to the content of the resin 106 in the luminance uniformity layer 103 (hereinafter referred to as the particle content ratio) is also not particularly limited as long as the particles 107 can be fixed by the resin 106, but may be set to about 40% or less when the luminance uniformity layer 103 is formed by printing.

When the luminance uniformity layer 103 is formed by coating, blending liquid containing the particles 107 including, for example, acrylic-based particles, styrene-based articles, and the like (liquid produced by mixing a solvent with the resin 106) may be coated and cured. The resin 106 may be, e.g., a thermosetting resin, a UV-curing resin, or the like. The resin 106 containing the particles 107 may be cured by shape-transfer method instead of coating.

When the luminance uniformity layer 103 is formed by printing, the resin 106 may be a transparent ink. The transparent ink is not a liquid ink but a solid ink made of materials such as thermosetting resins or thermoplastic resins and having light-transmitting property. The material of the transparent ink is not particularly limited, and may be, e.g., acrylic, polyester, vinyl, urethane acrylate, silicon, cellulose, epoxy, phenol, or the like. In the present disclosure, the transparent ink may be simply referred to as ink.

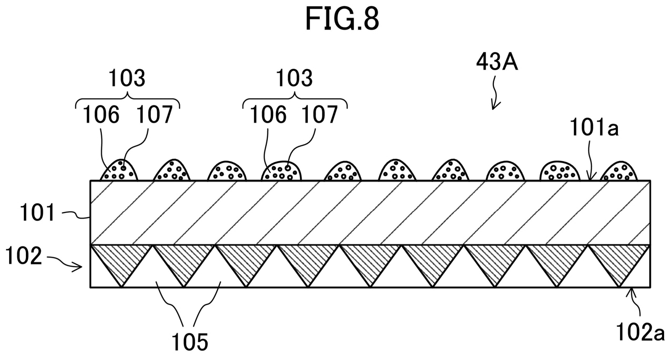

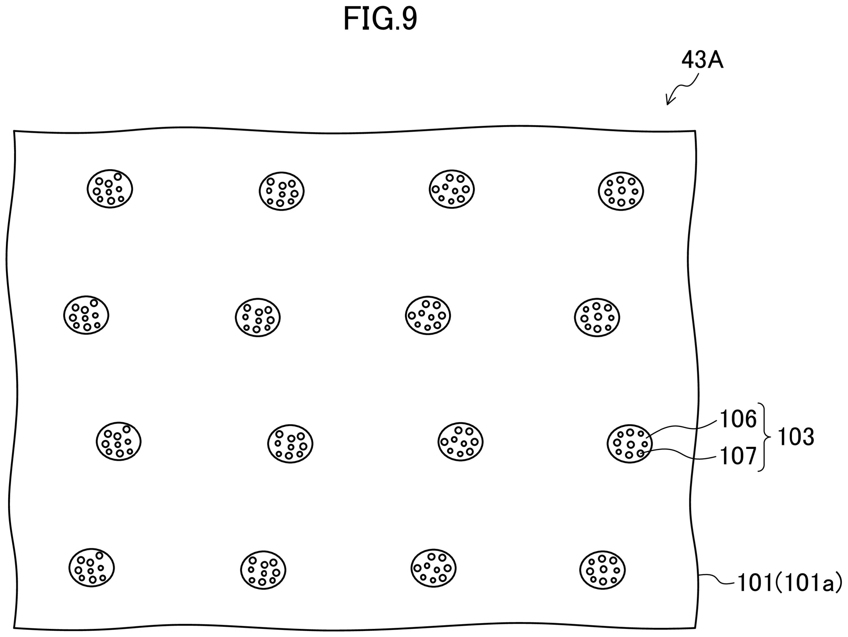

When the luminance uniformity layer 103 is formed by printing, the luminance uniformity layer 103 may be provided as a dot pattern by dot printing as shown in FIG. 8 and FIG. 9, instead of the luminance uniformity layer 103 being provided by solid printing on the entirety of the second surface 101a of the light diffusion sheet 43A as shown in FIG. 4. Accordingly, curling (warping) of the light diffusion sheet 43A can be more reduced than when the luminance uniformity layer 103 is formed by solid printing or coating.

When the luminance uniformity layer 103 constitutes a dot pattern, the particles 107 may be or may not be dispersed in the dotted resins 106 as shown in FIG. 8 and FIG. 9. When the luminance uniformity layer 103 is formed by dot printing, the particle content ratio can be set as low as 0% to 5%.

When the particles 107 are dispersed in the resin 106 provided in a dot shape, the particles 107 may be dispersed in the resin 106 such as a thermosetting resin or a UV-curing resin in order to produce an ink; then the ink may be dot-printed; and thereafter the resin 106 may be cured by UV light or hot air. The printing method is not particularly limited, and may be, e.g., screen printing (stencil printing), gravure printing (intaglio printing), flexographic printing and letterpress printing (relief printing), offset printing (lithographic printing), or the like categorized as analog printing; may be, e.g., an inkjet method, a laser method, or the like categorized as digital printing; or may be, e.g., hybrid printing, or the like, where the hybrid printing is a combination of both analog and digital printing methods. Alternatively, a positive film machine (e.g., setter) used for plate making may be used. Alternatively, in order to improve the printing accuracy, the various printing methods described above may be combined with techniques related to a surface treatment of a base material on which printing will be performed.

When the luminance uniformity layer 103 constitutes a dot pattern, the average size of dots (the average diameter of dots having a circular shape, or the average length of dots having a linear shape) is not particularly limited as long as dot printing can be conducted, but may be, e.g., about 30 µm to 300 µm. The dot density is also not particularly limited as long as dot printing can be conducted, but may be, e.g., about 5% to 70%. The dot density means the percentage of area occupied by dots per unit area. For example, if sixteen circular dots each having a diameter of 70 µm (and an area of 35 µm × 35 µm × 3.14 = 3,846.5 µm²) are arranged in an area of 1,120 µm × 980 µm (= 1,097,600 µm²), the dot density is calculated by the dot density = (3,846.5 µm² × 16) ÷ (1,097,600 µm²) ≈ 0.06 (= 6%).

### <Modification>

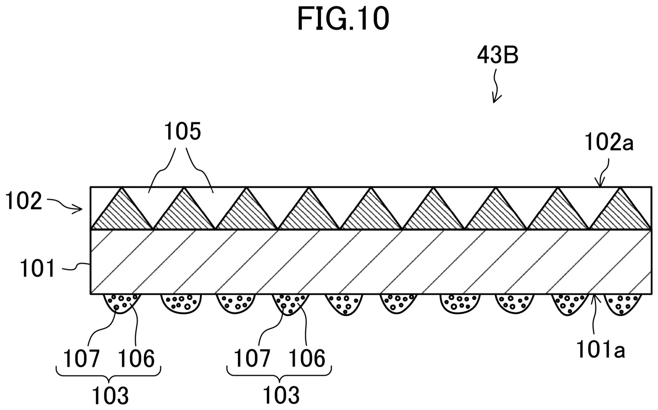

In the embodiments shown in FIG. 2 and FIG. 4, the luminance uniformity layer 103 is provided on the second surface 101a of the first light diffusion sheet 43A. Instead or in addition, a luminance uniformity layer 103 may be provided on the second surface 101a of the second light diffusion sheet 43B as shown in FIG. 10. FIG. 10 shows that the luminance uniformity layer 103 constitutes a dot pattern. Instead, the luminance uniformity layer 103 may be provided on the entirety of the second surface 101a of the second light diffusion sheet 43B.

As described above, the luminance uniformity layer 103 may be provided on any of the light incident surface and the light emitting surface of the light diffusion sheet 43. Further, when the plurality of light diffusion sheets 43 are used, the luminance uniformity layer 103 only has to be provided on at least one of the light diffusion sheets 43.

### <Manufacturing Method of Light Diffusion Sheet>

The manufacturing method of the light diffusion sheet 43 is not particularly limited, but the light diffusion sheet 43 may be manufactured by any of the following methods, for example.

In a first manufacturing method, pellets of the base material resin (plastic resin) are formed into a resin film by an extrusion molding machine. Then, two metal rolls, one of which has a surface having a protruding pyramid shape, and the other one of which has a surface having a flat shape or an inverted shape of a matte surface, are pressed onto the resin film, thereby producing the light diffusion sheet 43 having surfaces, one of which has an inverted pyramid shape (the recesses 105), and the other one of which has a flat or a matte surface. In this manufacturing method, the base material layer 101 and the light diffusion layer 102 are formed integrally. Then, the luminance uniformity layer 103 is formed on the flat surface or the matte surface of the light diffusion sheet 43 by printing or coating.

In a second manufacturing method, a base material layer 101 containing, for example, polyethylene terephthalate as a main component is prepared. While the base material layer 101 is fed between a pair of pressing rolls, an ultraviolet curable resin (a resin composition for protrusion formation) is supplied to one of surfaces of the base material layer 101 immediately before the pair of pressing rolls. The pressing roll in contact with the ultraviolet curable resin has an outer circumferential surface provided with a plurality of projections having a substantially regular quadrangular pyramid shape. After the base material layer 101 to which the ultraviolet curable resin has been supplied is pressed with the pair of pressing rolls, the ultraviolet curable resin is irradiated and cured with ultraviolet rays so that a plurality of inverted pyramid shapes (the recesses 105) which are inverted shapes of the plurality of projections having a substantially regular quadrangular pyramid shape are transferred. Accordingly, the light diffusion sheet 43 including the base material layer 101 having surfaces, on one of which the light diffusion layer 102 is provided, is produced. In this manufacturing method, the base material layer 101 and the light diffusion layer 102 are formed separately. Then, on the other one of the surfaces of the base material layer 101, the luminance uniformity layer 103 is formed by printing or coating.

### <Features of Embodiment (Including Modification)>

The light diffusion sheet 43 of the present embodiment described above includes the first surface 102a serving as a light emitting surface or a light incident surface and having an uneven shape configured to diffuse light, where the luminance uniformity layer 103 having the plurality of particles 107 or a dot pattern is provided on the second surface 101a opposite to the first surface 102a.

The light diffusion sheet 43 of the present embodiment includes the first surface 102a having an uneven shape configured to diffuse light, and includes the second surface 101a on which the luminance uniformity layer 103 in which the plurality of particles 106 are dispersed or the luminance uniformity layer 103 which constitutes a dot pattern is provided. Accordingly, the light is further diffused by the plurality of particles 106 or the dot pattern of the luminance uniformity layer 103, and thus the luminance uniformity capability of the light diffusion sheet 43 can be improved. A direct-type backlight is likely to have luminance unevenness where an area directly above a light source such as an LED is bright and its surrounding area is dark or likely to have luminance unevenness where, in contrast, the area directly above the light source is dark and its surrounding area is bright, but the light diffusion sheet 43 of the present embodiment can reduce such luminance unevenness, thereby improving the luminance uniformity. Thus, it is possible to cope with , for example, reduction in the thickness of the light diffusion sheet 43 or the number of layers of the light diffusion sheets 43 accompanied by further reduction in the thickness of the backlight unit.

In the light diffusion sheet 43 of the present embodiment, the luminance uniformity layer 103 may comprise a light transmissive resin 106 (e.g., ink) containing the plurality of particles 107. Accordingly, the luminance uniformity layer 103 can be easily formed by printing or coating. In this case, the luminance uniformity layer 103 may be configured with the ink arranged in a dot shape. Accordingly, each part of the luminance uniformity layer 103 constituting the dot pattern contains the particles 107, and thus the luminance uniformity capability of the light diffusion sheet 43 can be further improved by light diffusion by the dot pattern and light diffusion by the particles 107.

In the light diffusion sheet 43 of the present embodiment, the particles 107 may have a hollow structure. Accordingly, the difference between the refractive index of the hollow portion (e.g., air) of the particle 107 and the refractive index of the binder portion (the resin 106) that fixes the particles 107 in the luminance uniformity layer 103 becomes larger. Thus, the light diffusing effect by the particles 107 increases, and the luminance uniformity capability of the light diffusion sheet 43 can be further improved.

In the light diffusion sheet 43 of the present embodiment, the average particle diameter of the particles 107 may be 0.1 µm or more and 30 µm or less. Accordingly, the light diffusing effect by the particles 107 is ensured, whereas an increase in the thickness of the luminance uniformity layer 103 can be reduced.

In the light diffusion sheet 43 of the present embodiment, the uneven shape provided on the first surface 102a may be formed by the plurality of recesses 105 having a substantially inverted quadrangular pyramid shape and arranged in a two dimensional matrix. Accordingly, the light diffusing effect by the uneven shape increases, and the luminance uniformity capability of the light diffusion sheet 43 can be further improved.

In the light diffusion sheet 43 of the present embodiment, the second surface 101a may be a matte surface or a flat surface. Accordingly, the luminance uniformity layer 103 can be easily formed by printing or coating.

The backlight unit 40 of the present embodiment is built in the liquid crystal display device 50 and guides light emitted from the plurality of light sources 42 toward the display screen 50a. The backlight unit 40 includes the light diffusion sheet 43 of the present embodiment between the display screen 50a and the light sources 42. Thus, the luminance uniformity capability of the light diffusion sheet 43 can be improved. Thus, the thickness of the backlight unit 40 can be further reduced by, for example, reducing the thickness of the light diffusion sheet 43 or the number of layers of the light diffusion sheets 43, whereas the in-plane luminance uniformity can be maintained.

In the backlight unit 40 of the present embodiment, the plurality of light sources 42 may be arranged on the reflection sheet 41 provided opposite to the display screen 50a when viewed from the light diffusion sheet 43. Accordingly, light is further diffused by multiple reflections between the light diffusion sheet 43 and the reflection sheet 41, and thus the in-plane luminance uniformity is further improved.

In the backlight unit 40 of the present embodiment, the plurality of light diffusion sheets 43 may be arranged between the display screen 50a and the plurality of light sources 42. Accordingly, the in-plane luminance uniformity can be further improved with the plurality of light diffusion sheets 43. In this case, if the luminance uniformity layer 103 is provided on at least one of the plurality of light diffusion sheets 43, the in-plane luminance uniformity is further improved.

The liquid crystal display device 50 of the present embodiment includes the backlight unit 40 of the present embodiment and the liquid crystal display panel 5. Therefore, the thickness of the liquid crystal display device 50 can be reduced while the in-plane luminance uniformity is maintained. Information equipments (personal computers, mobile phones, and the like) incorporating the liquid crystal display device 50 of the present embodiment can also achieve the similar advantages.

In the present embodiment, the backlight unit 40 is a direct-type backlight unit in which the plurality of light sources 42 are distributed on the back surface side of the display screen 50a of the liquid crystal display device 50. Thus, in order to downsize the liquid crystal display device 50, it is necessary to shorten a distance between the light sources 42 and the light diffusion sheet 43 (the first light diffusion sheet 43A in the example shown in FIG. 2, which is the one of the light diffusion sheets 43 closest to the light sources 42). However, if the distance is shortened, for example, the phenomenon (luminance unevenness) where the luminance of the display screen 50a in a portion positioned on a region between the light sources 42 provided in a dispersed manner is lower than that in the other portions is likely to appear. In contrast, the light diffusion sheet 43 of the present embodiment is useful for reducing the luminance unevenness. In particular, the light diffusion sheet 43 of the present embodiment is conceivably more significantly useful if the distance between the light sources 42 and the light diffusion sheet 43 (the one of the light diffusion sheets 43 closest to the light source 42 if the light diffusion sheet 43 includes a plurality of light diffusion sheets 43) is set to 10 mm or less, preferably 5 mm or less, more preferably 2 mm or less, further more preferably 1 mm or less, and ultimately 0 mm, in consideration that the thickness of small to mid sized liquid crystal displays will be reduced in the future. For example, even when the distance between the light source and the sheet cannot be sufficiently ensured, e.g., when the distance between the light sources 42 and the light diffusion sheet 43 is 0 mm or more and 1 mm or less, due to reduction in the thickness of the liquid crystal display device 50, the light diffusion performance of the light diffusion sheet 43 of the present embodiment can reduce deterioration in the in-plane luminance uniformity.

### <Examples>

Examples and Comparative Examples will be described below.

In Comparative Example 1, the backlight unit 40 shown in FIG. 2 was prepared with the luminance uniformity layer 103 being not provided on either the first light diffusion sheet 43A or the second light diffusion sheet 43B.

In Examples 1 to 9, the backlight unit 40 shown in FIG. 2 was prepared with the luminance uniformity layer 103 being provided on the second surface 101a of the first light diffusion sheet 43A. Specifically, in Example 1, 10 parts by weight of hollow (single-hollow) beads as the particles 107 made of styrene-acrylic-based copolymer resin and having an average particle diameter of 454 nm were added with respect to 100 parts by weight of a medium as the resin (ink) 106, and then solid printing was conducted to provide the luminance uniformity layer 103 having a thickness of 10 µm. In Example 2, 10 parts by weight of hollow (multi-hollow) beads as the particles 107 made of acrylic-based resin and having an average particle diameter of 6.24 µm were added with respect to 100 parts by weight of a medium as the resin (ink) 106, and then solid printing was conducted to provide the luminance uniformity layer 103 having a thickness of 10 µm. In Example 3, 10 parts by weight of hollow (multi-hollow) beads as the particles 107 made of acrylic-based resin and having an average particle diameter of 7.5 µm were added with respect to 100 parts by weight of a medium as the resin (ink) 106, and then solid printing was conducted to provide the luminance uniformity layer 103 having a thickness of 11 µm. In Example 4, 40.8 parts by weight of poly-dispersed (non-hollow) beads as the particles 107 made of styrene-acrylic-based copolymer resin and having an average particle diameter of 3 µm, and 4.5 parts by weight of poly-dispersed (non-hollow) beads as the particles 107 made of acrylic-based resin and having an average particle diameter of 7 µm were added with respect to 100 parts by weight of a medium as the resin (ink) 106. Then, solid printing was conducted to provide the luminance uniformity layer 103 having a thickness of 14 µm. In Example 5, a medium was used as the resin (ink) 106 and the particles 107 were not added. Then, dot printing with the dot density of about 6% was conducted to provide the luminance uniformity layer 103. In Example 6, 10 parts by weight of hollow (single-hollow) beads as the particles 107 having an average particle diameter of 454 µm were added with respect to 100 parts by weight of a medium as the resin (ink) 106, and then dot printing with the dot density of about 6% was conducted to provide the luminance uniformity layer 103. In Example 7, 10 parts by weight of hollow (single-hollow) beads as the particles 107 having an average particle diameter of 6.24 µm were added with respect to 100 parts by weight of a medium as the resin (ink) 106, and then dot printing with the dot density of about 6% was conducted to provide the luminance uniformity layer 103. In Example 8, 10 parts by weight of hollow (multi-hollow) beads as the particles 107 having an average particle diameter of 7.5 µm were added with respect to 100 parts by weight of a medium as the resin (ink) 106, and then dot printing with the dot density of about 6% was conducted to provide the luminance uniformity layer 103. In Example 9, 40.8 parts by weight of poly-dispersed beads as the particles 107 having an average particle diameter of 3 µm, and 4.5 parts by weight of poly-dispersed beads as the particles 107 having an average particle diameter of 7 µm were added with respect to 100 parts by weight of a medium as the resin (ink) 106. Then, dot printing with the dot density of about 6% was conducted to provide the luminance uniformity layer 103.

In Comparative Example 2, the backlight unit 40 shown in FIG. 2 was prepared with the luminance uniformity layer 103 being not provided on either the first light diffusion sheet 43A or the second light diffusion sheet 43B. Note that, in Comparative Example 2, a light-reflective white ink was arranged in a gradation manner on the second surface 101a (matte surface) of the first light diffusion sheet 43A so that areas with higher luminance have a higher installation density of the white ink.

In Examples 10 and 11, the backlight unit 40 shown in FIG. 2 was prepared with the luminance uniformity layer 103 being provided on the second surface 101a of the second light diffusion sheet 43B. Specifically, in Example 10, a medium was used as the resin (ink) 106 and the particles 107 were not added. Then, dot printing with the dot density of about 6% was conducted to provide the luminance uniformity layer 103. In Example 11, 10 parts by weight of hollow (single-hollow) beads as the particles 107 having an average particle diameter of 6.24 µm were added with respect to 100 parts by weight of a medium as the resin (ink) 106, and then dot printing with the dot density of about 6% was conducted to provide the luminance uniformity layer 103. In Examples 10 and 11, similarly to Comparative Example 2, a light-reflective white ink was arranged in a gradation manner on the second surface 101a (matte surface) of the first light diffusion sheet 43A so that areas with higher luminance had a higher installation density of the white ink.

In each of Examples 1 to 11 and Comparative Examples 1 and 2, the light diffusion sheet 43 using an acrylate-based UV-curing resin so that the light diffusion layer 102 was provided on the base material layer 101 was used, where the light diffusion layer 102 had the plurality of recesses 105 having an inverted pyramid shape and arranged in a two dimensional matrix and where the base material layer 101 was made of polycarbonate and had a thickness of 250 µm. The apex angle and arrangement pitch of the recesses 105 were 90° and 100 µm, respectively. The plurality of light sources 42 were blue LEDs arranged in square at 3.5 mm pitch × 4.5 mm pitch. The wavelength selection sheet 44A had a thickness of 55 µm, the color conversion sheet 44B had a thickness of 60 µm, the prism sheets 45 and 46 had a thickness of 125 µm, and the luminance improving film 47 had a thickness of 160 µm. The first prism sheet 45 was provided with prisms having an apex angle of about 60° and a height of about 40 µm and arranged at about 50 µm pitch. In a valley between the prisms, a small prism having a height of about 10 µm was provided. The second prism sheet 46 was provided with prisms having an apex angle of about 90° and a height of about 25 µm and arranged at about 50 µm pitch.

In the backlight unit configurations of Examples 1 to 11 and Comparative Examples 1 and 2 described above, the in-plane luminance uniformity was evaluated as follows with a transparent glass plate being placed on the luminance enhancing sheet 47 in order to reduce floating of the sheets. First, the luminance (cd·m²) in the upward vertical direction (the direction from the LED array toward the glass plate) was measured using a two-dimensional color luminance meter UA-200 manufactured by TOPCON TECHNOHOUSE CORPORATION. Next, for two-dimensional luminance distribution images obtained, variation in the light emitting intensity of individual LEDs was corrected and filtering process was conducted to reduce bright/dark spot noises attributed to foreign materials and the like. Then, average and standard deviation were calculated for the luminance of all the pixels. Finally, the in-plane luminance uniformity was calculated with the "in-plane luminance uniformity" defined as "average of luminance / standard deviation of luminance."

In consideration of the luminance (average) and in-plane luminance uniformity of Comparative Example 1 as references (100%), the results were Example 1: the luminance 101% and the in-plane luminance uniformity 101%; Example 2: the luminance 101% and the in-plane luminance uniformity 105%; Example 3: the luminance 102% and the in-plane luminance uniformity 114%; Example 4: the luminance 101% and the in-plane luminance uniformity 106%; Example 5: the luminance 100% and the in-plane luminance uniformity 101%; Example 6: the luminance 102% and the in-plane luminance uniformity 106%; Example 7: the luminance 102% and the in-plane luminance uniformity 108%; Example 8: the luminance 101% and the in-plane luminance uniformity 106%; and Example 9: the luminance 102% and the in-plane luminance uniformity 102%.

Further, in consideration of the luminance (average) and in-plane luminance uniformity of Comparative Example 2 as references (100%), the results were Example 10: the luminance 98% and the in-plane luminance uniformity 106%; and Example 11: the luminance 99% and the in-plane luminance uniformity 107%.

As described above, in each of Examples 1 to 11, the in-plane luminance uniformity was improved while the luminance was maintained. That is, the effectiveness of the luminance uniformity layer 103 provided on the light diffusion sheet 43 was confirmed.

### <Additional Examples>

Additional examples (Examples 12 to 25) will be described below.

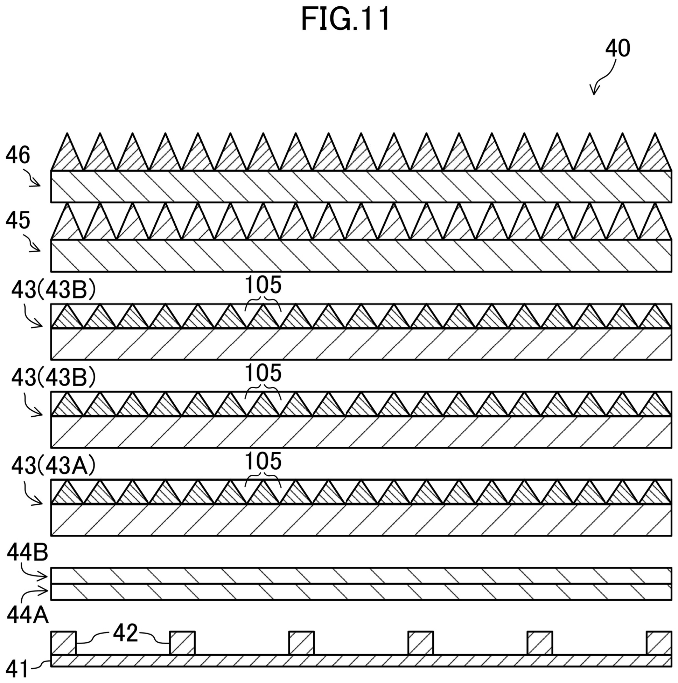

FIG. 11 shows a cross-sectional configuration of the backlight unit 40 used to evaluate the light diffusion sheets of Examples 12 to 25. In FIG. 11, the components identical to those of the backlight unit 40 of the embodiment shown in FIG. 2 are labeled the same reference characters.

The backlight unit 40 shown in FIG. 11 is different in the following points from the backlight unit 40 shown in FIG. 2. In the backlight unit 40 shown in FIG. 11, the wavelength selection sheet 44A and the color conversion sheet 44B were arranged between the plurality of light sources 42 and the first light diffusion sheet 43A. As the light diffusion sheets 43, one first light diffusion sheet 43A and two second light diffusion sheets 43B were arranged. The first light diffusion sheet 43A was arranged so that the first surface 102a on which the light diffusion layer 102 (the plurality of recesses 105) was provided faced the side opposite to the light source 42 (the light emitting side). In the backlight unit 40 shown in FIG. 11, the luminance enhancing sheet 47 was not provided.

In each of Examples 12 to 25, the light diffusion sheet 43 using an acrylate-based UV-curing resin so that the light diffusion layer 102 was provided on the base material layer 101 was used, where the light diffusion layer 102 had the plurality of recesses 105 having an inverted pyramid shape and arranged in a two dimensional matrix and where the base material layer 101 was made of polycarbonate and had a thickness of 110 µm. No diffusing agent was added to the base material layer 101. The apex angle and arrangement pitch of the recesses 105 were 90° and 100 µm, respectively. The luminance uniformity layer 103 was provided on the second surface 101a of the first light diffusion sheet 43A of the light diffusion sheets 43 as described later, and the luminance uniformity layer 103 was not provided on the second light diffusion sheet 43B of the light diffusion sheets 43. The plurality of light sources 42 were blue LEDs arranged in square at 3.5 mm pitch × 4.5 mm pitch. The arrangement direction of the recesses 105 was inclined by about 45° with respect to the arrangement direction of the light sources 42. The wavelength selection sheet 44A had a thickness of 55 µm, the color conversion sheet 44B had a thickness of 60 µm, the prism sheets 45 and 46 had a thickness of 125 µm, and the luminance improving film 47 had a thickness of 160 µm. The first prism sheet 45 was provided with prisms having an apex angle of about 60° and a height of about 40 µm and arranged at about 50 µm pitch. In a valley between the prisms, a small prism having a height of about 10 µm was provided. The second prism sheet 46 was provided with prisms having an apex angle of about 90° and a height of about 25 µm and arranged at about 50 µm pitch.

The first light diffusion sheet 43A of Example 12 was provided with the luminance uniformity layer 103, where 10 parts by weight of hollow porous beads as the particles 107 made of acrylic-based resin and having an average particle diameter of 6 µm were added with respect to 100 parts by weight of a medium as the resin (ink) 106, and then solid printing was conducted to provide the above luminance uniformity layer 103 having a thickness of 5 µm.

The first light diffusion sheet 43A of Example 13 was provided with the luminance uniformity layer 103, where 10 parts by weight of single-hollow beads as the particles 107 made of acrylic-based resin and having an average particle diameter of 11 µm were added with respect to 100 parts by weight of a medium as the resin (ink) 106, and then solid printing was conducted to provide the above luminance uniformity layer 103 having a thickness of 5 µm.

The first light diffusion sheet 43A of Example 14 was provided with the luminance uniformity layer 103, where 10 parts by weight of hollow porous beads as the particles 107 made of acrylic-based resin and having an average particle diameter of 6 µm were added with respect to 100 parts by weight of a medium as the resin (ink) 106, and then solid printing was conducted to provide the above luminance uniformity layer 103 having a thickness of 35 µm.

The first light diffusion sheet 43A of Example 15 was provided with the luminance uniformity layer 103, where 10 parts by weight of single-hollow beads as the particles 107 made of acrylic-based resin and having an average particle diameter of 11 µm were added with respect to 100 parts by weight of a medium as the resin (ink) 106, and then solid printing was conducted to provide the above luminance uniformity layer 103 having a thickness of 35 µm.

In Examples 12 to 15, the luminance uniformity layer 103 was formed by blending a UV binder with the above-described beads and using a bar coater suitable for each coating thickness.

The first light diffusion sheet 43A of Example 16 was provided with the luminance uniformity layer 103, where 40.8 parts by weight of poly-dispersed beads as the particles 107 made of styrene-acrylic-based resin and having an average particle diameter of 3 µm, and 4.5 parts by weight of poly-dispersed beads as the particles 107 made of acrylic-based resin and having an average particle diameter of 7 µm were added with respect to 100 parts by weight of a medium as the resin (ink) 106; and then solid printing (the print area ratio: 100%) was conducted to provide the above luminance uniformity layer 103 having a thickness of 30 µm. The print area ratio means the ratio of an ink-provided area in the second surface 101a of the first light diffusion sheet 43A on which the luminance uniformity layer 103 is provided.

The first light diffusion sheet 43A of Example 17 was provided with the luminance uniformity layer 103, where 45.3 parts by weight of poly-dispersed beads as the particles 107 made of acrylic-based resin and having an average particle diameter of 12 µm were added with respect to 100 parts by weight of a medium as the resin (ink) 106, and then solid printing (the print area ratio: 100%) was conducted to provide the above luminance uniformity layer 103 having a thickness of 30 µm.

The first light diffusion sheet 43A of Example 18 was provided with the luminance uniformity layer 103, where 133.45 parts by weight of poly-dispersed beads as the particles 107 made of acrylic-based resin and having an average particle diameter of 12 µm were added with respect to 100 parts by weight of a medium as the resin (ink) 106, and then solid printing (the print area ratio: 100%) was conducted to provide the above luminance uniformity layer 103 having a thickness of 35 µm.

The first light diffusion sheet 43A of Example 19 was provided with the luminance uniformity layer 103, where 40.8 parts by weight of poly-dispersed beads as the particles 107 made of styrene-acrylic-based resin and having an average particle diameter of 3 µm, and 4.5 parts by weight of poly-dispersed beads as the particles 107 made of acrylic-based resin and having an average particle diameter of 7 µm were added with respect to 100 parts by weight of a medium as the resin (ink) 106; and then dot printing with the print area ratio of 8% was conducted to provide the above luminance uniformity layer 103.

The first light diffusion sheet 43A of Example 20 was provided with the luminance uniformity layer 103, where 45.3 parts by weight of poly-dispersed beads as the particles 107 made of acrylic-based resin and having an average particle diameter of 12 µm were added with respect to 100 parts by weight of a medium as the resin (ink) 106, and then dot printing with the print area ratio of 8% was conducted to provide the above luminance uniformity layer 103.

The first light diffusion sheet 43A of Example 21 was provided with the luminance uniformity layer 103, where 133.45 parts by weight of poly-dispersed beads as the particles 107 made of acrylic-based resin and having an average particle diameter of 12 µm were added with respect to 100 parts by weight of a medium as the resin (ink) 106, and then dot printing with the print area ratio of 8% was conducted to provide the above luminance uniformity layer 103.

In Examples 16 to 21, the luminance uniformity layer 103 was formed by blending a UV binder with the above-described beads and using a screen printer. In the dot printing of each of Examples 16 to 21, dots having diameters of 200 µm, 300 µm, and 400 µm were randomly arranged.

The first light diffusion sheet 43A of Examples 22 to 24 was provided with the luminance uniformity layer 103, where 40.8 parts by weight of poly-dispersed beads as the particles 107 made of styrene-acrylic-based resin and having an average particle diameter of 3 µm, and 4.5 parts by weight of poly-dispersed beads as the particles 107 made of acrylic-based resin and having an average particle diameter of 7 µm were added with respect to 100 parts by weight of a medium as the resin (ink) 106; and then dot printing with the print area ratio of 8% was conducted to provide the above luminance uniformity layer 103. In the dot printing of Example 22, similarly to Example 19, dots having diameters of 200 µm, 300 µm, and 400 µm were randomly arranged. In the dot printing of Example 23, dots having a diameter of 200 µm were randomly arranged. In the dot printing of Example 24, dots having a diameter of 400 µm were randomly arranged.

The first light diffusion sheet 43A of Example 25 was provided with the luminance uniformity layer 103, where 40.8 parts by weight of poly-dispersed beads as the particles 107 made of styrene-acrylic-based resin and having an average particle diameter of 3 µm, and 4.5 parts by weight of poly-dispersed beads as the particles 107 made of acrylic-based resin and having an average particle diameter of 7 µm were added with respect to 100 parts by weight of a medium as the resin (ink) 106; and then dot printing with the print area ratio of 32% was conducted to provide the above luminance uniformity layer 103. In the dot printing of Example 25, dots having diameters of 400 µm, 600 µm, and 800 µm were randomly arranged.

In Examples 22 to 25, the luminance uniformity layer 103 was formed by blending a UV binder with the above-described beads and using a screen printer.

The light diffusion sheet (the first light diffusion sheet 43A provided with the luminance uniformity layer 103) of each of Examples 12 to 25 described above was placed in the backlight unit 40 shown in FIG. 11, and a transparent glass plate was placed on the second prism sheet 46 to reduce floating of the sheets. Then, the luminance and luminance uniformity were evaluated as follows. First, the luminance (cd·m²) in the upward vertical direction (the direction from the LED array toward the glass plate) was measured using a two-dimensional color luminance meter UA-200 manufactured by TOPCON TECHNOHOUSE CORPORATION. Next, for two-dimensional luminance distribution images obtained, variation in the light emitting intensity of individual LEDs was corrected and filtering process was conducted to reduce bright/dark spots attributed to foreign materials and the like. Then, average and standard deviation were calculated for the luminance of all the pixels. Finally, the luminance uniformity was calculated with the "luminance uniformity" defined as "average of luminance / standard deviation of luminance."

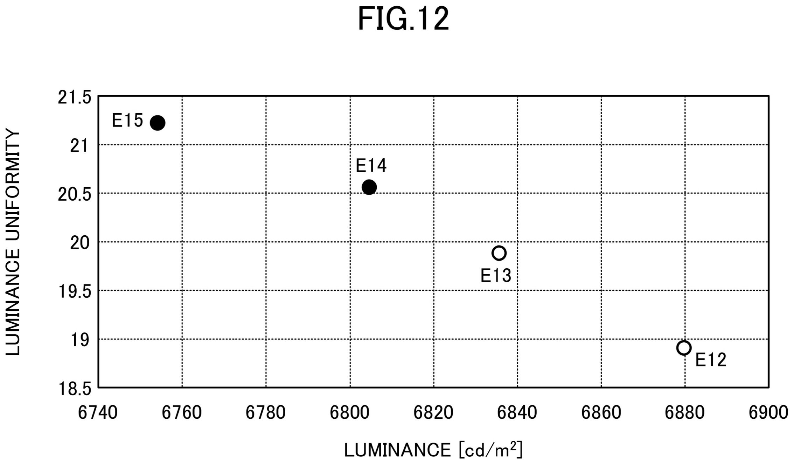

FIG. 12 shows the evaluation results of the luminance (average) and luminance uniformity of the first light diffusion sheets 43A of Examples 12 to 15 (E12 to 15). As shown in FIG. 12, it has been found that as the luminance uniformity layer 103 uniformly provided (i.e., formed by solid printing) on the second surface 101a of the first light diffusion sheet 43A is made thicker, light scattering is more promoted in the thickness direction of the luminance uniformity layer 103, and thus the light diffusion function is enhanced and the luminance uniformity is improved. For sufficient promotion of the light scattering, the thickness of the luminance uniformity layer 103 is preferably 5 µm or more. On the other hand, in terms of the manufacturing process such as the number of printing, in terms of reduction in the thickness of the backlight unit 40, or the like, the thickness of the luminance uniformity layer 103 is preferably 100 µm or less and more preferably 50 µm or less. The average particle diameter of the particles 107 added to the luminance uniformity layer 103 is preferably 0.1 µm or more to ensure the light diffusing effect of the particles 107, and preferably 30 µm or less to reduce an increase in the thickness of the luminance uniformity layer 103.

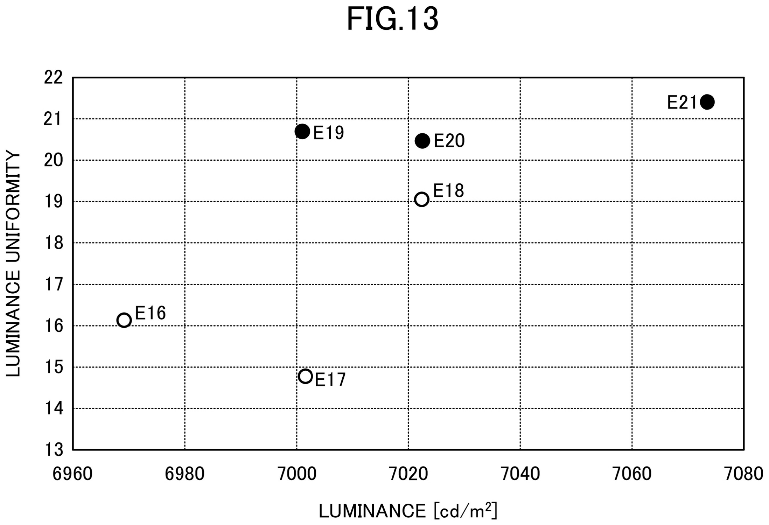

FIG. 13 shows the evaluation results of the luminance (average) and luminance uniformity of the first light diffusion sheets 43A of Examples 16 to 21 (E16 to 21). As shown in FIG. 13, it has been found that if the material and amount of the particles 107 added to the luminance uniformity layer 103 are unchanged, the luminance uniformity layers 103 (E19 to E21) formed by dot printing exhibit better luminance uniformity than the luminance uniformity layers 103 (E16 to E18) formed by solid printing. It is conceivable that this is due to the light diffusion function of the dot pattern itself. In the case of solid printing, as the mass ratio of the beads (the particles 107) to the ink (the resin 106) in the luminance uniformity layer 103 (hereinafter referred to as the bead addition ratio in some cases) is made larger, light scattering by the luminance uniformity layer 103 is more promoted, and thus the light diffusion function is enhanced and the luminance uniformity is improved. For sufficient promotion of the light scattering, the bead addition ratio is preferably 40% or more. If the bead addition ratio is unchanged, beads having a larger average particle diameter can more promote light scattering. On the other hand, in terms of the manufacturing process such as easiness of printing, the bead addition ratio is preferably 200% or less.

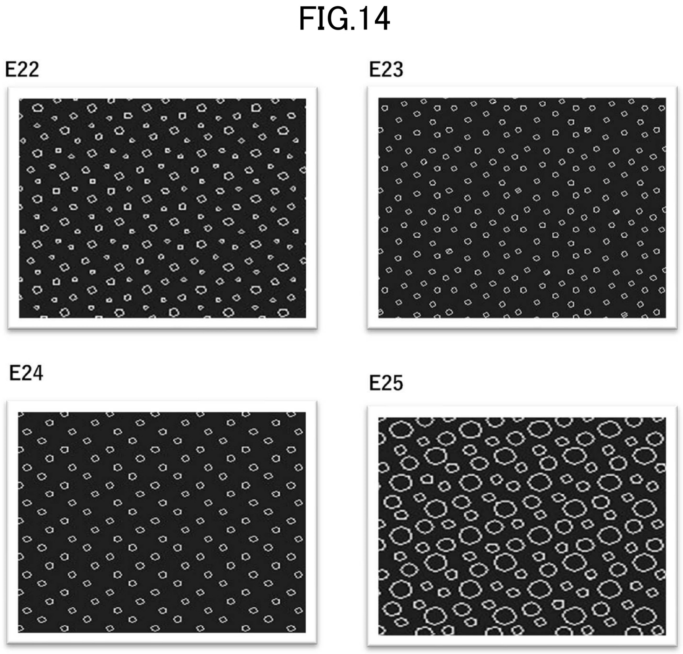

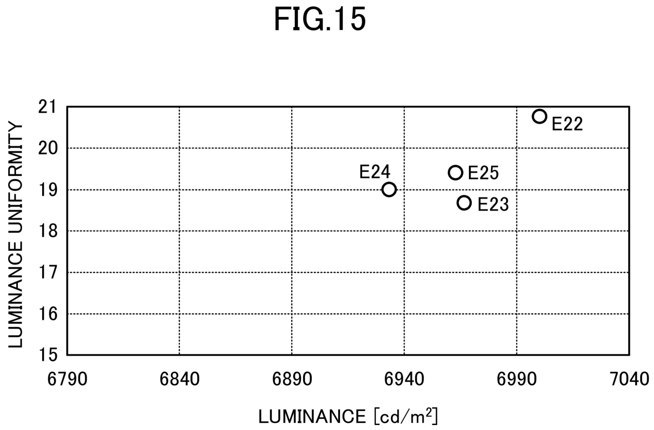

FIG. 14 shows dot patterns in the first light diffusion sheets 43A of Examples 22 to 25 (E22 to E25), and FIG. 15 shows evaluation results of the luminance (average) and luminance uniformity of the first light diffusion sheets 43A of Examples 22 to 25 (E22 to E25). As shown in FIG. 15, it has been found that if the print area ratio is unchanged, the luminance uniformity layer 103 (E22) on which dots having a plurality of different diameters are printed exhibit better luminance uniformity than the luminance uniformity layers 103 (E23 to 24) on which dots having a single diameter are printed. It is conceivable that the dots having a plurality of different diameters and a plurality of different heights are arranged together and thus the light scattering effect is increased and the luminance uniformity is improved. Further, it has been found from the comparison between Example 22 (E22) and Example 25 (E25) that as the print area ratio increases, the luminance uniformity layer 103 approaches the state of solid printing (the printing area ratio: 100%), and thus the luminance uniformity improvement effect is reduced. Specifically, in order to achieve a better luminance uniformity improvement effect by the light diffusion function of a dot pattern than solid printing, the print area ratio is preferably 35% or less. If the print area ratio is too low, the percentage of light not scattered by the luminance uniformity layer 103 increases. Thus, the print area ratio is preferably 1% or more, more preferably 3% or more, and still more preferably 5% or more.

In Examples 19 to 25, the height of dot printing was set to 35 µm. The height of dot printing can be set higher as the dot diameter is made larger. The height of dot printing is preferably 100 µm or less and more preferably 50 µm or less. When the height of dot printing is within this range, the print area ratio becomes 35% or less, and thus the sufficient luminance uniformity improvement effect is likely to be obtained.

### (Other Embodiments)

The above describes embodiments (including modifications and examples; the same applies hereinafter) of the present disclosure. However, the present disclosure is not limited only to the aforementioned embodiments, and various modifications are possible within the scope of the disclosure. That is, the above description of the embodiments is solely to serve as an example in nature, and is not intended to limit the present disclosure, applications thereof, or uses thereof.

### (Aspects of the Invention)

The invention will further be described in the following aspects, which defines the invention independently from the above disclosure, but are exemplified by the above disclosure.

[Aspect 1] A light diffusion sheet including a first surface serving as a light emitting surface or a light incident surface and having an uneven shape configured to diffuse light,
wherein
a luminance uniformity layer having a plurality of particles or a dot pattern is provided on a second surface opposite to the first surface.

[Aspect 2] The light diffusion sheet of aspect 1, wherein
the luminance uniformity layer comprises a light transmissive ink or resin, each containing the plurality of particles.

[Aspect 3] The light diffusion sheet of aspect 2, wherein
the luminance uniformity layer is uniformly provided on the second surface, and
the luminance uniformity layer has a thickness of 5 µm or more.

[Aspect 4] The light diffusion sheet of aspect 2, wherein
the luminance uniformity layer is uniformly provided on the second surface, and
a mass ratio of the plurality of particles to the ink or the resin in the luminance uniformity layer is 40% or more.

[Aspect 5] The light diffusion sheet of aspect 2, wherein
the luminance uniformity layer is configured with the ink arranged in a dot shape.

[Aspect 6] The light diffusion sheet of aspect 5, wherein
the ink is arranged so that dots having a plurality of different diameters are provided.

[Aspect 7] The light diffusion sheet of aspect 5, wherein
a ratio of an area in the second surface where the ink is arranged is 35% or less.

[Aspect 8] The light diffusion sheet of any one of aspects 1 to 7, wherein
the plurality of particles have a hollow structure.

[Aspect 9] The light diffusion sheet of any one of aspects 1 to 7, wherein
an average particle diameter of the plurality of particles is 0.1 µm or more and 30 µm or less.

[Aspect 10] The light diffusion sheet of any one of aspects 1 to 7, wherein
the uneven shape is formed by a plurality of recesses having a substantially inverted quadrangular pyramid shape and arranged in a two dimensional matrix.

[Aspect 11] The light diffusion sheet of any one of aspects 1 to 7, wherein
the second surface is a matte surface or a flat surface.

[Aspect 12] A backlight unit built in a liquid crystal display device and guiding light emitted from a plurality of light sources toward a display screen, comprising:
the light diffusion sheet of any one of aspects 1 to 7 provided between the display screen and the plurality of light sources.

[Aspect 13] A liquid crystal display device, comprising:
the backlight unit of aspect 12; and
a liquid crystal display panel.

[Aspect 14] An information equipment comprising the liquid crystal display device of aspect 13.

### DESCRIPTION OF REFERENCE CHARACTERS

- 1: TFT Substrate
- 2: CF Substrate
- 3: Liquid Crystal Layer
- 5: Liquid Crystal Display Panel
- 6: First Polarizing Plate
- 7: Second Polarizing Plate
- 40: Backlight Unit
- 41: Reflection Sheet
- 42: Light Source
- 43: Light Diffusion Sheet
- 44A: Wavelength Selection Sheet
- 44B: Color Conversion Sheet
- 45: First Prism Sheet
- 46: Second Prism Sheet
- 47: Luminance Enhancing Sheet
- 50: Liquid Crystal Display Device
- 50a: Display Screen
- 101: Base Material Layer
- 102: Light Diffusion Layer
- 103: Luminance Uniformity Layer
- 105: Recess
- 106: Resin (Ink)
- 107: Particle

## Claims

1. A light diffusion sheet comprising:
a base material layer including a first surface serving as a light emitting surface or a light incident surface and having an uneven shape configured to diffuse light; and
a luminance uniformity layer having a plurality of particles and provided on a second surface of the base material layer opposite to the first surface,
wherein
the luminance uniformity layer is uniformly provided on the entire second surface as a layer different from the base layer and comprises a light transmissive resin containing the plurality of particles, and
a mass ratio of the plurality of particles to the resin in the luminance uniformity layer is 40% or more.

2. The light diffusion sheet of claim 1, wherein
the luminance uniformity layer is uniformly provided on the second surface, and
the luminance uniformity layer has a thickness of 5 µm or more.

3. The light diffusion sheet of claim 1 or 2, wherein
the plurality of particles have a hollow structure.

4. The light diffusion sheet of any one of claims 1 to 3, wherein
an average particle diameter of the plurality of particles is 0.1 µm or more and 30 µm or less.

5. The light diffusion sheet of any one of claims 1 to 4, wherein
the uneven shape is formed by a plurality of recesses having a substantially inverted quadrangular pyramid shape and arranged in a two dimensional matrix.

6. The light diffusion sheet of any one of claims 1 to 5, wherein
the second surface is a matte surface or a flat surface.

7. A backlight unit built in a liquid crystal display device and guiding light emitted from a plurality of light sources toward a display screen, comprising:
the light diffusion sheet of any one of claims 1 to 6 provided between the display screen and the plurality of light sources.

8. A liquid crystal display device, comprising:
the backlight unit of claim 7; and
a liquid crystal display panel.

9. An information equipment comprising the liquid crystal display device of claim 8.
